# EUROPEAN PATENT APPLICATION

(11) **EP 2 408 200 A1**
(43) Date of publication of application: **18.01.2012**
(21) Application number: 10750717.0
(22) Date of filing: 03.03.2010
(51) Int. Cl.: H04N 7/15, H04N 7/14, H04N 7/173

(54) **INFORMATION PROCESSING DEVICE AND METHOD, AND INFORMATION PROCESSING SYSTEM**

(30) Priority: 10.03.2009 JP 2009056266
(71) Applicant: Sony Corporation, Tokyo 108-0075 (JP)
(72) Inventor: TSUKAGOSHI Ikuo, Tokyo 108-0075 (JP)
(74) Representative: Körber, Martin Hans
(86) International application number: PCT/JP2010/053393
(87) International publication number: WO 2010/103963

(57) **Abstract**

The invention relates to information processing equipment and method and an information processing system, and specifically to information processing equipment and method and an information processing system that can realize interactive communications with improved video image quality and with preserved realistic sensations even in an uplink band.

Client equipment 11A as a transmission side separates only a picture as a predominant element of communication from a taken picture and transmits picture data of the separated picture as primary data 21A. Client equipment 11B as a reception side receives picture data of a texture picture as an alternative to a background of the taken picture as secondary data 22A from a streaming server 12A on a network 13. The received primary data 21A and secondary data 22A are synthesized and a composite picture is displayed on a monitor 34. The invention is applicable to a transmitter-receiver that performs picture communication, for example.

## Description

### Technical Field

The present invention relates to information processing equipment and method and an information processing system, and specifically to information processing equipment and method and an information processing system that can realize interactive communications with improved image quality and with preserved realistic sensations even in an uplink band.

### Background Art

In related art, as a general network environment, ADSL (Asymmetric Digital Subscriber Line) connection has been widely prevalent.

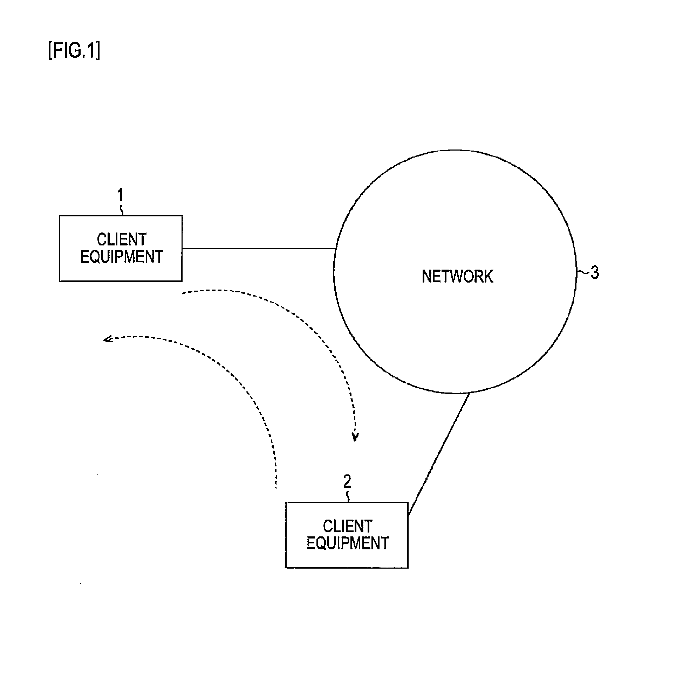

Using Fig. 1, a network environment in the general ADSL connection will be explained.

Client equipment 1 and client equipment 2 are interconnected via a network 3 by ADSL connection to the network 3. For example, in the case where the client equipment 1 and the client equipment 2 make interactive communication, the client equipment 1 transmits data to the network 3. That is, the data is transmitted from the client equipment 1 to the network 3 by uplink. The client equipment 2 receives the data transmitted from the client equipment 1 via the network 3. That is, the data is transmitted from the network 3 to the client equipment 2 by downlink. In this manner, the client equipment 2 can receive the data transmitted from the client equipment 1.

Similarly, in the communication in the reverse direction, the client equipment 2 transmits data to the network 3. That is, the data is transmitted from the client equipment 2 to the network 3 by uplink. The client equipment 1 receives the data transmitted from the client equipment 2 via the network 3. That is, the data is transmitted from the network 3 to the client equipment 1 by downlink. In this manner, the client equipment 1 can receive the data transmitted from the client equipment 2 (for example, see Patent Document 1).

In the ADSL connection, the width of the communication band at the (downstream) side where data is transmitted by downlink is set wider and the width of the communication band at the (upstream) side where data is transmitted by uplink is set narrower. Hereinafter, the communication band at the downlink side is referred to as "downlink band". Further, the communication band at the uplink side is referred to as "uplink band".

### Prior Art Document

### Patent Document

Patent Document 1: JP-A-2001-236292

### Summary of the Invention

### Problems that the Invention is to Solve

However, in the above described network environment in the general ADSL connection, in the case where interactive communication such as video communication or video chat is made, the width of the uplink band is largely constrained compared to the width of the downlink band. Accordingly, the compression coding rate of the transmission data becomes lower. Note that the interactive communication such as video communication or video chat is hereinafter referred to as "picture communication".

Therefore, in the case where a user compression-codes whole captured pictures from a camera and transmits them by uplink, it may become difficult that faces of people as the predominant elements of the communication are received with sufficient image quality at the other side.

Further, not only in the above described images of the faces of people but also in other pictures, improvements in image quality in the uplink band are desired.

The invention has been achieved in view of the above described situations for improvements in video image quality and preservation of realistic sensations even in the uplink band.

### Means for Solving the Problems

First information processing equipment according to an aspect of the invention includes dividing means for segmenting an original picture into one or more areas and dividing predetermined one area of the one or more segmented areas from the original picture as a partial picture in a picture size of the area, transmitting means for transmitting the partial picture divided from the original picture by the dividing means to other information processing equipment, and requesting means for making a request to a delivery unit that delivers a background picture to be synthesized with the partial picture to transmit the background picture to the other information processing equipment.

The partial picture is a picture containing an object as a predominant element of picture communication.

A first information processing method according to an aspect of the invention is a method corresponding to the above described information processing equipment according to the aspect of the invention.

In the first information processing equipment and method as the aspects of the invention, by information processing equipment or a computer that controls the information processing equipment, the original picture is segmented into one or more areas and predetermined one area of the one or more segmented areas is divided from the original picture as the partial picture in the picture size of the area, the partial picture divided from the original picture is transmitted to other information processing equipment, and a request is made to the delivery unit that delivers the background picture to be synthesized with the partial picture to transmit the background picture to the other information processing equipment.

Second information processing equipment according to an aspect of the invention includes partial picture receiving means, when an original picture is segmented into one or more areas, predetermined one area of the one or more segmented areas is divided from the original picture as a partial picture in a picture size of the area, and the partial picture is transmitted by other information processing equipment, for receiving the partial picture, and synthesizing means for synthesizing the partial picture received by the partial picture receiving means and a predetermined background picture, and thereby, generating a composite picture.

Display control means for controlling display of a picture containing the composite picture synthesized by the synthesizing means is further provided.

The partial picture is a picture containing an object as a predominant element of picture communication.

Background picture receiving means, when the background picture is delivered from a delivery unit, for receiving the background picture is further provided, and the synthesizing means synthesizes the partial picture and the background picture received by the background picture receiving means, and thereby, generates the composite picture.

Holding means for holding the background picture received by the background picture receiving means is further provided, and the synthesizing means synthesizes the partial picture and the background picture held by the holding means, and thereby, generates the composite picture.

A second information processing method according to an aspect of the invention is a method corresponding to the above described information processing equipment according to the aspect of the invention.

In the second information processing equipment and method as the aspects of the invention, by information processing equipment or a computer that controls the information processing equipment, when the original picture is segmented into one or more areas, predetermined one area of the one or more segmented areas is divided from the original picture as the partial picture in the picture size of the area by other information processing equipment, and the partial picture is transmitted, the partial picture is received and the received partial picture and the predetermined background picture are synthesized, and thereby, the composite picture is generated.

An information processing system according to an aspect of the invention includes first information processing equipment including dividing means for segmenting an original picture as an object to be transmitted from the first information processing equipment to second information processing equipment into one or more areas and dividing predetermined one area of the one or more segmented areas from the original picture as a partial picture in a picture size of the area, transmitting means for transmitting the partial picture divided from the original picture by the dividing means to the second information processing equipment, and requesting means for making a request to a delivery unit that delivers a background picture to be synthesized with the partial picture to transmit the background picture to the second information processing equipment, the delivery unit that delivers the background picture to the second information processing equipment in response to the request from the first information processing equipment, and second information processing equipment including partial picture receiving means for receiving the partial picture transmitted from the first information processing equipment, background picture receiving means for receiving the background picture delivered from the delivery unit, and synthesizing means for synthesizing the partial picture received by the partial picture receiving means and the background picture received by the background picture receiving means, and thereby, generating the composite picture.

In the information processing system as the aspect of the invention, by the first information processing equipment, the original picture is segmented into one or more areas and predetermined one area of the one or more segmented areas is divided from the original picture as the partial picture in the picture size of the area, the partial picture divided from the original picture by the dividing means is transmitted to the second information processing equipment, and the request is made to the delivery unit that delivers the background picture to be synthesized with the partial picture to transmit the background picture to the second information processing equipment. Further, by the delivery unit, the background picture is delivered to the second information processing equipment in response to the request from the first information processing equipment. By the second information processing equipment, the partial picture transmitted from the first information processing equipment is received, the background picture delivered from the delivery unit is received, and the partial picture received by the partial picture receiving means and the background picture received by the background picture receiving means are synthesized, and thereby, the composite picture is generated.

### Advantages of the Invention

As described above, according to the invention, the video image quality can be improved and the realistic sensations can be preserved even in the uplink band.

### Brief Description of the Drawings

[Fig. 1] Fig. 1 is diagram for explanation of a network environment in general ADSL connection.
[Fig. 2] Fig. 2 is functional block diagram showing an outline of an information processing system to which the invention is applied.
[Fig. 3] Fig. 3 is functional block diagram showing a configuration example of client equipment 11.
[Fig. 4] Fig. 4 is diagram for explanation of picture display by the client equipment 11 in Fig. 3.
[Fig. 5] Fig. 5 is functional block diagram showing a functional configuration example of a partial view creation unit 32A in Fig. 3.
[Fig. 6] Fig. 6 is functional block diagram showing a functional configuration example of a partial view creation unit 32B in Fig. 3.
[Fig. 7] Fig. 7 is diagram for explanation of an example of processing of a picture separation processing part in Fig. 5.
[Fig. 8] Fig. 8 is diagram for explanation of the example of processing of the picture separation processing part in Fig. 5.
[Fig. 9] Fig. 9 is diagram for explanation of processing of a moving picture frame synthesis unit in Figs. 5 and 6.
[Fig. 10] Fig. 10 is flowchart for explanation of an example of interactive communication processing by the client equipment 11 in Fig. 3.
[Fig. 11]Fig. 11 is flowchart for explanation of the example of interactive communication processing by the client equipment 11 in Fig. 3.
[Fig. 12] Fig. 12 is block diagram showing a configuration example of a computer that controls the information processing system to which the invention is applied.

### Mode for Carrying Out the Invention

### <Embodiments of the Invention>

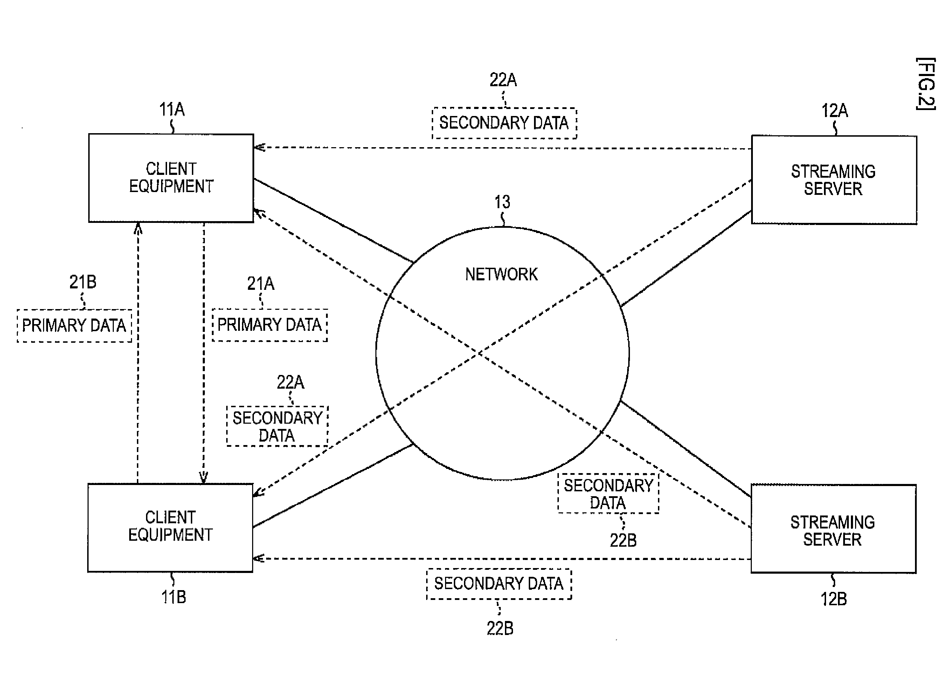

Fig. 2 is a functional block diagram showing an outline of an information processing system to which a technique of the invention is applied.

In Fig. 2, blocks surrounded by dotted lines show data. Further, dotted lines show flows of data. Note that the actual data transmission paths are not the dotted lines themselves, but paths via a network 13, which will be described later.

The information processing system of the example in Fig. 2 includes client equipment 11A, 11B and streaming servers 12A, 12B interconnected via the network 13.

Note that the client equipment 11A, 11B and the streaming servers 12A, 12B may be respectively provided in the numbers of one or more, and not limited to the example in Fig. 2.

The client equipment 11A performs picture communication with the client equipment 11B via the network 13.

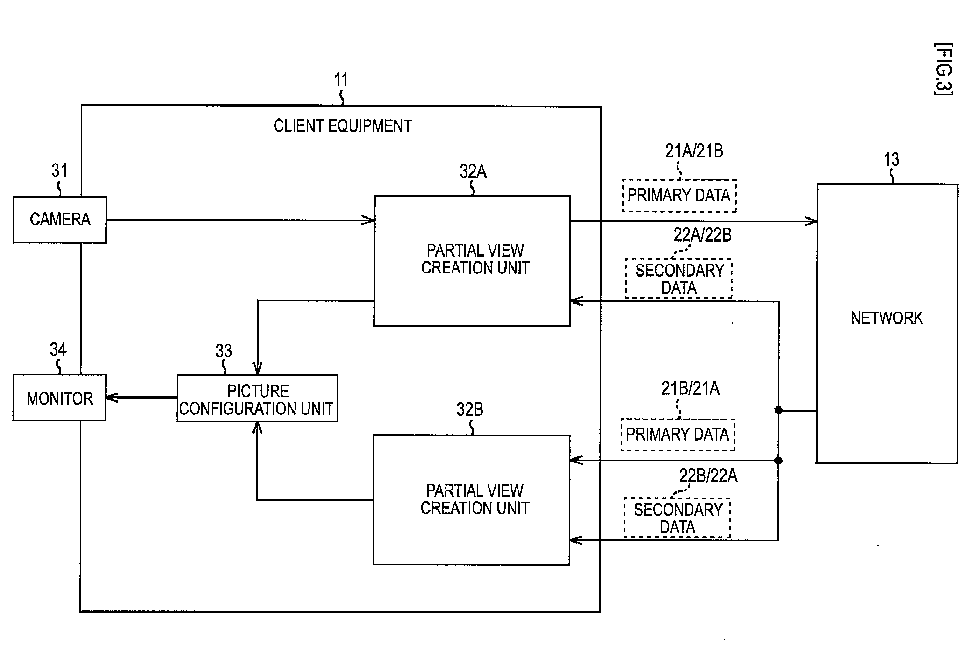

The client equipment 11A separates picture data of the captured pictures input from the camera (see a camera 31 in Fig. 3, which will be described later) into the following first picture data and second picture data. The first picture data is picture data on part as the predominant element of communication of the captured pictures, for example, on people. Note that, hereinafter, the first picture data is referred to as "primary data". The second picture data is picture data on part other than the primary data of the captured pictures, for example, on backgrounds of people. Note that, hereinafter, the second picture data is referred to as "background picture data".

The client equipment 11A compression-codes primary data 21A of the picture data of the captured pictures. The compression-coded primary data 21A is transmitted to the client equipment 11B via the network 13.

Similarly, the client equipment 11B compression-codes primary data 21B of the picture data of the captured pictures. The compression-coded primary data 21B is transmitted to the client equipment 11A via the network 13.

The streaming server 12A delivers secondary data 22A as an alternative to the background picture data corresponding to the primary data 21A to the client equipment 11A and the client equipment 11B via the network 13. The secondary data 22A is picture data of still pictures or moving pictures stored in the streaming server 12A in advance, for example. Note that the secondary data 22A is compression-coded and stored.

Similarly, the streaming server 12B delivers secondary data 22B as an alternative to the background picture data corresponding to the primary data 21B to the client equipment 11A and the client equipment 11B via the network 13. The secondary data 22B is picture data of still pictures or moving pictures stored in the streaming server 12B in advance, for example. Note that the secondary data 22B is compression-coded and stored.

The client equipment 11A receives the primary data 21B transmitted from the client equipment 11B via the network 13. The client equipment 11A also receives the secondary data 22B transmitted from the streaming server 12B via the network 13. As described above, both the primary data 21B and the secondary data 22B are compression-coded. Accordingly, the client equipment 11A performs decompression-decoding processing on the respective primary data 21B and secondary data 22B. Furthermore, the client equipment 11A performs synthesis processing on the decompression-decoded primary data 21B and secondary data 22B. The picture data obtained by the synthesis processing is picture data on the following composite picture. That is, in place of the original background pictures, composite picture data on pictures (hereinafter, referred to as "partial view data 23B") in which, using the still pictures or the like corresponding to the secondary data 22B as background pictures, part (for example, people) as the predominant element of communication corresponding to the primary data 21B is synthesized thereon is obtained. The partial view data 23B is displayed as reception pictures from the client equipment 11B as the other side of the communication in a monitor of the client equipment 11A (a monitor 34 in Fig. 3, which will be described later).

The client equipment 11A holds the primary data 21A as picture data corresponding to its own pictures. The client equipment 11A also receives the secondary data 22A transmitted from the streaming server 12A via the network 13. As described above, both the primary data 21A and the secondary data 22A are compression-coded. Accordingly, the client equipment 11A performs decompression-decoding processing on the respective primary data 21A and secondary data 22A. Furthermore, the client equipment 11A performs synthesis processing on the decompression-decoded primary data 21A and secondary data 22A. The picture data obtained by the synthesis processing is picture data on the following composite picture. That is, in place of the original background pictures, composite picture data on pictures (hereinafter, referred to as "partial view data 23A") in which, using the still pictures or the like corresponding to the secondary data 22A as background pictures, part (for example, people) as the predominant element of communication corresponding to the primary data 21A is synthesized thereon is obtained. The partial view data 23A is displayed as transmission pictures to the client equipment 11B as the other side of the communication in a monitor of the client equipment 11A (the monitor 34 in Fig. 3, which will be described later).

That is, the client equipment 11A can display the reception pictures (partial view data 23B) from the client equipment 11B as the other side of the communication and the transmission pictures (partial view data 23A) to the client equipment 11B on the monitor (the monitor 34 in Fig. 3, which will be described later) at the same time.

The client equipment 11B receives the primary data 21A transmitted from the client equipment 11A via the network 13. The client equipment 11B also receives the secondary data 22A transmitted from the streaming server 12A via the network 13. As described above, both the primary data 21A and the secondary data 22A are compression-coded. Accordingly, the client equipment 11B performs decompression-decoding processing on the respective primary data 21A and secondary data 22A. Furthermore, the client equipment 11B performs synthesis processing on the primary data 21A and secondary data 22A obtained as a result of decompression-decoding. The picture data obtained by the synthesis processing is picture data on the following composite picture. That is, in place of the original background pictures, composite picture data on pictures (hereinafter, referred to as "partial view data 23A") in which, using the still pictures or the like corresponding to the secondary data 22A as background pictures, part (for example, people) as the predominant element of communication corresponding to the primary data 21A is synthesized thereon is obtained. The partial view data 23A is displayed as reception pictures from the client equipment 11A as the other side of the communication in a monitor of the client equipment 11B (a monitor 34 in Fig. 3, which will be described later).

The client equipment 11B holds the primary data 21B as picture data corresponding to its own pictures. The client equipment 11B also receives the secondary data 22B transmitted from the streaming server 12B via the network 13. As described above, both the primary data 21B and the secondary data 22B are compression-coded. Accordingly, the client equipment 11B performs decompression-decoding processing on the respective primary data 21B and secondary data 22B. Furthermore, the client equipment 11B performs synthesis processing on the primary data 21B and secondary data 22B obtained as a result of decompression-decoding. The picture data obtained by the synthesis processing is picture data on the following composite picture. That is, in place of the original background pictures, composite picture data on pictures (hereinafter, referred to as "partial view data 23B") in which, using the still pictures or the like corresponding to the secondary data 22B as background pictures, part (for example, people) as the predominant element of communication corresponding to the primary data 21B is synthesized thereon is obtained. The partial view data 23B is displayed as transmission pictures to the client equipment 11A as the other side of the communication in the monitor of the client equipment 11B (the monitor 34 in Fig. 3, which will be described later).

In this manner, also in the client equipment 11B, the reception pictures (partial view data 23A) from the client equipment 11A as the other side of the communication and the transmission pictures (partial view data 23B) to the client equipment 11A can be displayed on the monitor (the monitor 34 in Fig. 3, which will be described later) at the same time.

### [Configuration Example of Client Equipment]

Next, details of the client equipment 11A, 11B will be explained.

Note that, hereinafter, in the case where it is not necessary to individually distinguish the client equipment 11A, 11B, they will be collectively referred to as "client equipment 11".

Fig. 3 is a functional block diagram showing a functional configuration example of client equipment 11.

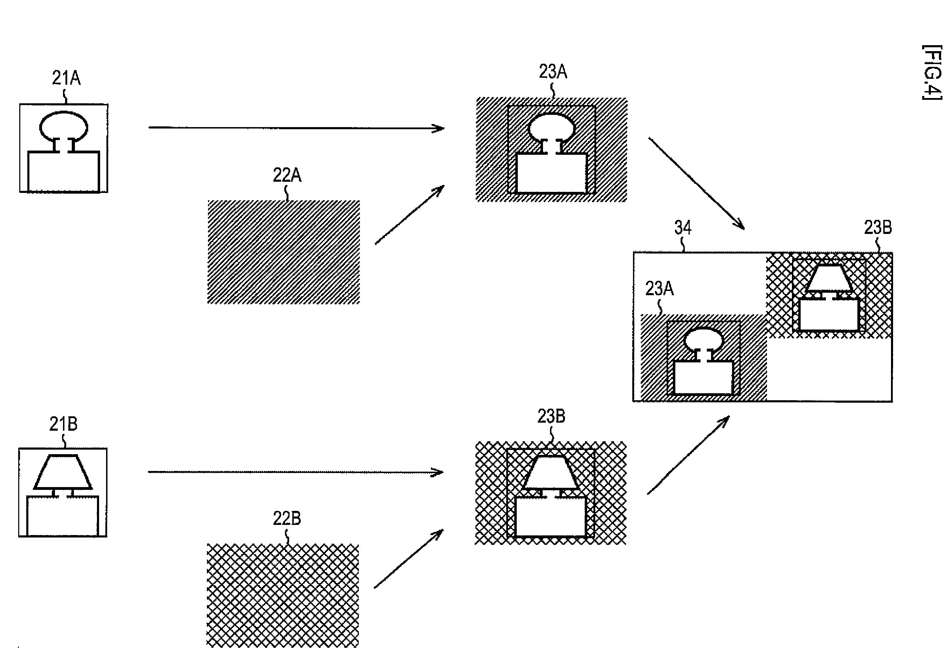

Fig. 4 is a diagram for explanation of a picture display example in the client equipment 11 in Fig. 3.

The client equipment 11 in the example of Fig. 3 includes the camera 31, partial view creation units 32A and 32B, a picture configuration unit 33, and the monitor 34. Note that the camera 31 and the monitor 34 are not essential component elements for the client equipment 11. That is, the camera 31 and the monitor 34 as external devices may be connected to the client equipment 11.

As below, the explanation will be made as the client equipment 11A.

The camera 31 takes pictures of subjects of a user etc. and resulting picture data (hereinafter, referred to as "taken picture data") to the partial view creation unit 32A.

The partial view creation unit 32A separates the taken picture data into primary data 21A and background picture data. Further, the partial view creation unit 32A performs compression-coding processing on the primary data 21A. The compression-coded primary data 21A is transmitted to the client equipment 11B via the network 13.

Further, the partial view creation unit 32A receives the secondary data 22A transmitted from the streaming server 12A shown in Fig. 2 via the network 13.

Here, above described above, the secondary data 22A is compression-coded. Accordingly, the partial view creation unit 32A performs decompression-decoding processing on the compression-coded secondary data 22A. Further, the partial view creation unit 32A performs synthesis processing on the primary data 21A and the secondary data 22A, and thereby, generates partial view data 23A as shown in the top part of Fig. 4.

As shown in the top part of Fig. 4, the primary data 21A is picture data on a picture formed by eliminating the background picture from the taken picture, that is, part as the predominant element of communication (the upper body of a particular person in the example in Fig. 4, for example). Further, the secondary data 22A is picture data on a still picture or the like as an alternative to the original background picture (the still picture of the shaded pattern in the example in Fig. 4, for example). Therefore, the partial view data 23A is picture data on a composite picture in which the part as the predominant element of communication (the upper body of a particular person in the example in Fig. 4, for example) is synthesized on the still picture or the like as an alternative to the original background picture (the still picture of the shaded pattern in the example in Fig. 4, for example).

The partial view creation unit 32B receives the primary data 21B transmitted from the client equipment 11B shown in Fig. 2 via the network 13.

Further, the partial view creation unit 32B receives the secondary data 22B transmitted from the streaming server 12B shown in Fig. 2 via the network 13.

Here, above described above, the primary data 21B and the secondary data 22B are compression-coded. Accordingly, the partial view creation unit 32B performs decompression-decoding processing on the compression-coded primary data 21B and secondary data 22B. Further, the partial view creation unit 32B performs synthesis processing on the primary data 21B and the secondary data 22B, and thereby, generates partial view data 23B as shown in the bottom part of Fig. 4.

As shown in the bottom part of Fig. 4, the primary data 21B is picture data on a picture formed by eliminating the background picture from the taken picture, that is, part as the predominant element of communication (the upper body of a particular person in the example in Fig. 4, for example). Further, the secondary data 22B is picture data on a still picture or the like as an alternative to the original background picture (the still picture of the lattice pattern in the example in Fig. 4, for example). Therefore, the partial view data 23B is picture data on a composite picture in which the part as the predominant element of communication (the upper body of a particular person in the example in Fig. 4, for example) is synthesized on the still picture or the like as an alternative to the original background picture (the still picture of the lattice pattern in the example in Fig. 4, for example).

The screen configuration unit 33 in Fig. 3 controls the monitor 34 to display a picture corresponding to the partial view data 23A from the partial view creation unit 32 and a picture corresponding to the partial view data 23B from the partial view creation unit 32B in one screen of the monitor 34 as shown in the monitor 34 on the right in Fig. 4.

Note that, for simplicity of explanation, the explanation has been made as the client equipment 11A. Obviously, the client equipment 11B similarly has the above described various functions.

In this manner, the user can perform picture communication using the client equipment 11A and the client equipment 11B while viewing the picture of itself and the picture at the other side of the communication at the same time, for example.

Further, the client equipment 11A as the transmission side can perform picture control for the secondary data 22A as an alternative to the original background picture. For example, in the case where the secondary data 22A is still pictures, the client equipment 11A can perform page flipping control of a still picture slide show or the like. Furthermore, for example, in the case where the secondary data 22A is moving pictures, the client equipment 11A can perform fast-forward and fast-rewind control of the moving pictures or the like.

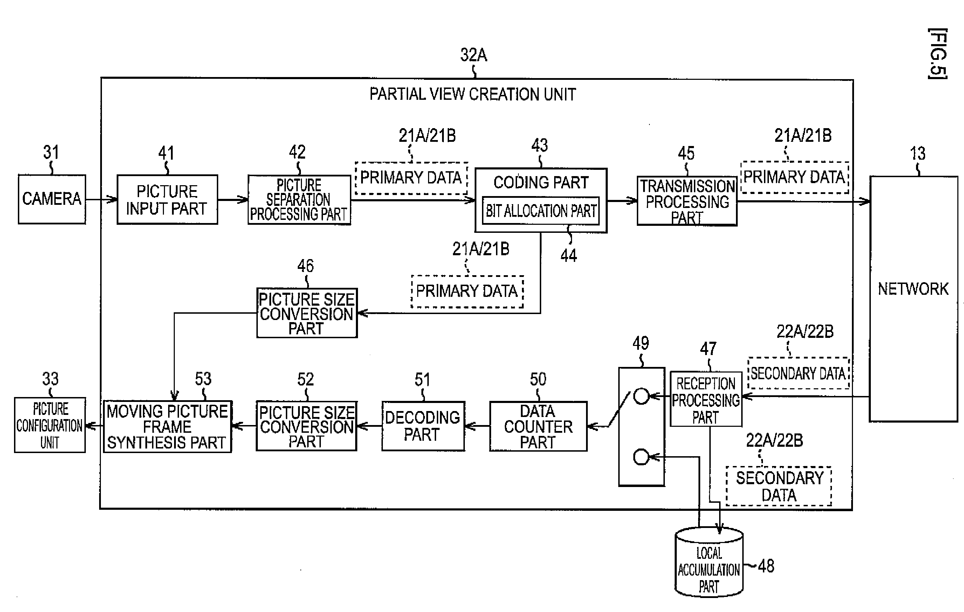

Fig. 5 shows a detailed functional configuration example of the partial view creation unit 32A of the client equipment 11 in Fig. 3.

In the example in Fig. 5, the partial view creation unit 32A includes a picture input part 41 to a moving picture frame synthesis part 53.

Note that, for the simplicity as below, like the explanation in Fig. 3, the explanation will be made as the partial view creation unit 32A of the client equipment 11A. Obviously, the partial view creation unit 32A of the client equipment 11B similarly has the various functions, which will be explained as below.

The picture input part 41 inputs taken picture data from the camera 31 and supplies it to a picture separation processing part 42.

The picture separation processing part 42 separates taken picture data into primary data 21A on pictures (for example, people) as the predominant element of communication and background picture data on background pictures. The separated primary data 21A is supplied to a coding part 43.

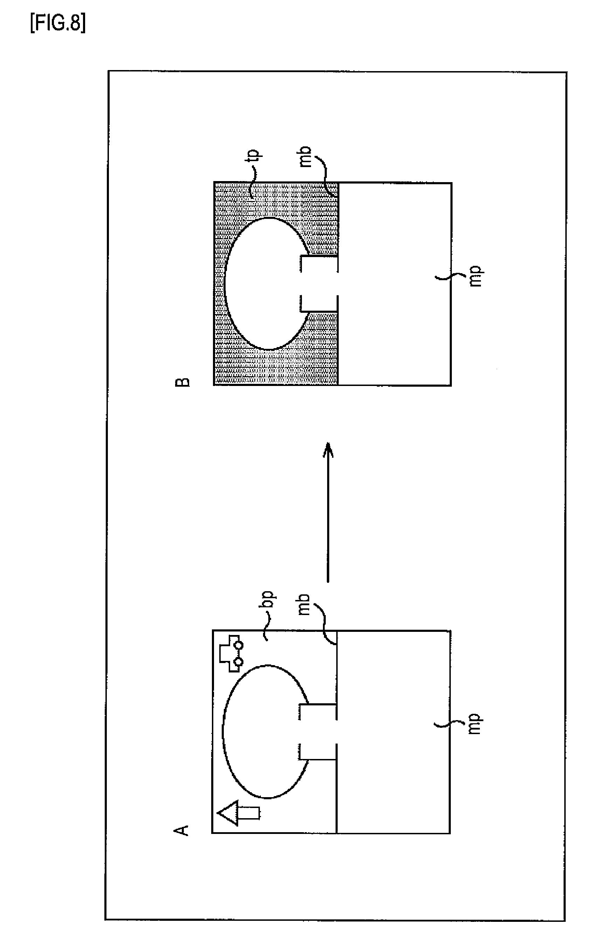

Note that the pictures corresponding to the primary data 21A immediately after separation still contain the background parts other than the pictures (for example, people) as the predominant element of communication. Accordingly, the picture separation processing part 42 executes processing of replacing the background parts other than the pictures (for example, people) as the predominant element of communication of the pictures corresponding to the primary data 21A immediately after separation by smooth texture with less high-frequency components. The details of the processing will be described later with reference to Fig. 8.

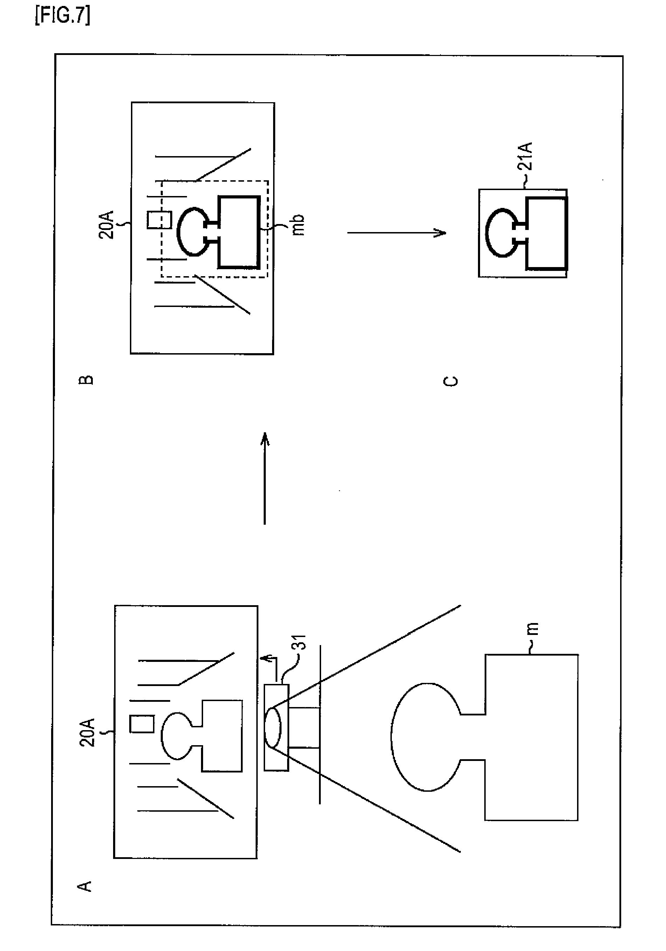

The above explained series of processing, i.e., the processing of separating the background picture data into the primary data 21A and the secondary data 22A to replacing the background picture data by the smooth texture is hereinafter referred to as "picture separation processing". A specific example of the picture separation processing will be described later using Figs. 7 and 8.

The coding part 43 includes a bit allocation part 44.

The coding part 43 performs compression-coding processing on the primary data 21A input from the picture separation processing part 42. The compression-coded primary data 21A is supplied to a transmission processing part 45.

Further, the coding part 43 supplies the primary data 21A to a picture size conversion part 46.

The bit allocation part 44 performs processing of adaptively allocating bits at compression-coding of the primary data 21A.

The transmission processing part 45 transmits the compression-coded primary data 21A to the client equipment 11B via the network 13.

The picture size conversion part 46 performs size conversion processing on the primary data 21A from the coding part 43. The primary data 21A with picture size changed is supplied to the moving picture frame synthesis part 53.

The secondary data 22A transmitted from the streaming server 12A in Fig. 2 is received by the client equipment 11 (the client equipment 11A in this example) via the network 13.

A reception processing part 47 of the client equipment 11A receives the secondary data 22A and supplies it to a switch part 49.

The reception processing part 47 allows a local accumulation part 48 to accumulate the secondary data 22A according to need.

The local accumulation part 48 is contained in the client equipment 11A or connected as an external device. The local accumulation part 48 stores the secondary data 22A in advance.

For example, the reception processing part 47 performs accumulation of the secondary data 22A into the local accumulation part 48 in advance when there is room in the communication band of the network 13.

The switch part 49 switches the input to either of the reception processing part 47 side or the local accumulation part 48 side. Then, from the switched side of the reception processing part 47 side and the local accumulation part 48 side, the secondary data 22A is input to the switch part 49. The secondary data 22A input to the switch part 49 is supplied to a data counter part 50. In this case, the switch part 49 switches to the local accumulation part 48 and outputs the secondary data 22A, and thereby, the downlink band may be more effectively used. Note that, as the display of the monitor 34 after switching by the switch part 49, display can be performed only from non-reference pictures of the compression-coded video as a file.

The data counter part 50 calculates file readout progress position on the streaming server 12A on the secondary data 22A. Thereby, the secondary data 22A received via the network 13 can be read as offset from the leading position of the copy file of the streaming server 12A in the local accumulation part 48.

The secondary data 22A output from the data counter part 50 is compression-coded. Accordingly, a decoding part 51 performs decompression-decoding processing on the compression-coded secondary data 22A. The resulting secondary data 22A is supplied to a picture size conversion part 52.

The picture size conversion part 52 performs size conversion processing on the secondary data 22A from the decoding part 51. The secondary data 22A with picture size changed is supplied to the moving picture frame synthesis part 53.

The moving picture frame synthesis part 53 performs synthesis processing on the primary data 21A from the picture size conversion part 46 and the secondary data 22A from the picture size conversion part 52 with respect to each frame. The resulting partial view data 23A is supplied to the picture configuration unit 33.

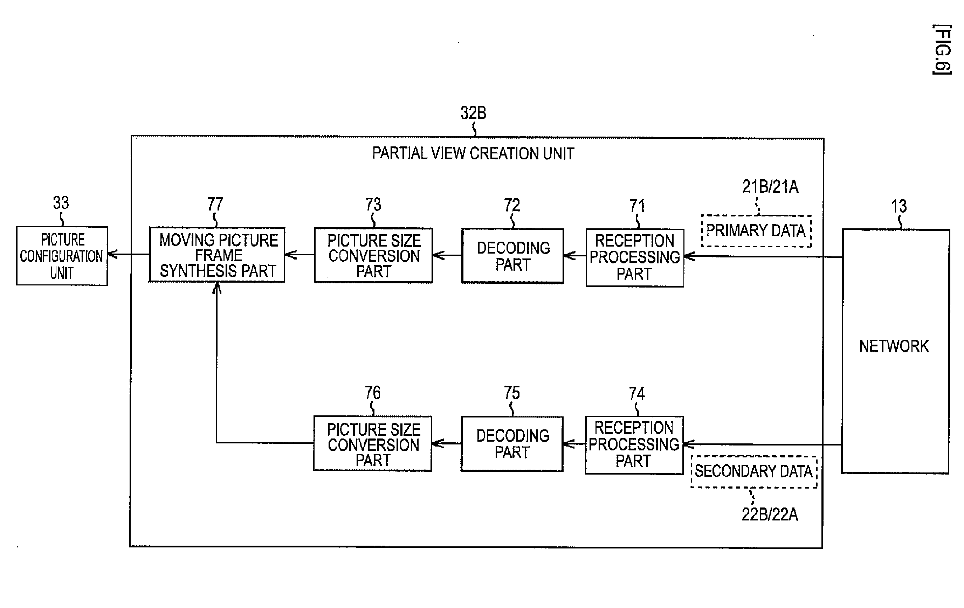

Fig. 6 shows a detailed functional configuration example of the partial view creation unit 32B of the client equipment 11B in Fig. 3.

In the example in Fig. 6, the partial view creation unit 32B includes a reception processing part 71 to a moving picture frame synthesis part 77.

Note that, for the simplicity as below, like the explanation in Fig. 3, the explanation will be made as the partial view creation unit 32B of the client equipment 11A. Obviously, the partial view creation unit 32B of the client equipment 11B similarly has the various functions, which will be explained as below.

The primary data 21B transmitted from the client equipment 11 (the client equipment 11B in this example) in Fig. 2 is received by the client equipment 11 (the client equipment 11A in this example) via the network 13.

The reception processing part 71 receives the primary data 21B transmitted from the client equipment 11B via the network 13.

Here, as described above, the primary data 21B is compression-coded. Accordingly, a decoding part 72 performs decompression-decoding processing on the compression-coded primary data 21B. The decompression-decoded primary data 21B is supplied to a picture size conversion part 73.

The picture size conversion part 73 performs size conversion processing on the primary data 21B from the decoding part 72. The primary data 21B with picture size changed is supplied to the moving picture frame synthesis part 77.

The secondary data 22B transmitted from the streaming server 12B in Fig. 2 is received by the client equipment 11 (the client equipment 11A in this example) via the network 13.

The reception processing part 74 receives the secondary data 22B transmitted from the streaming server 12B via the network 13.

Here, as described above, the secondary data 22B is compression-coded. Accordingly, a decoding part 75 performs decompression-decoding processing on the compression-coded secondary data 22B. The decompression-decoded secondary data 22B is supplied to a picture size conversion part 76.

The picture size conversion part 76 performs size conversion processing on the secondary data 22B from the decoding part 75. The secondary data 22B with picture size changed is supplied to the moving picture frame synthesis part 77.

The moving picture frame synthesis part 77 performs synthesis processing on the primary data 21B from the picture size conversion part 73 and the secondary data 22B from the picture size conversion part 76 with respect to each frame. The resulting partial view data 23B is supplied to the picture configuration unit 33.

Note that the client equipment 11 can control file reproduction of the secondary data 22A and the secondary data 22B to automatically and repeatedly reproduce the data.

### [Example of Picture Separation Processing of Picture Display Processing Apparatus to which the Invention is Applied]

Figs. 7 and 8 are diagrams for explanation of an example of picture separation processing by the picture separation processing part 42 in Fig. 5.

A of Fig. 7 shows an example of taken picture data 20A output from the camera 31 as a result of imaging of an subject m by the camera 31. That is, the taken picture data 20A of A of Fig. 7 is supplied to the picture separation processing part 42 via the picture input part 41.

Then, the picture separation processing part 42 detects a boundary mb between a part as the predominant element of communication (the subject m in the example of Fig. 7) and a background of the taken picture corresponding to the taken picture data 20A. Further, the picture separation processing part 42 separates primary data 21A (see C in Fig. 7) and background picture data from the taken picture data 20A according to the boundary mb.

Note that the picture shown in C of Fig. 7, i.e., the picture corresponding to the primary data 21A is basically a picture of the part of the dotted line of the taken picture shown in B of Fig. 7. However, as described with "basically", the picture of the part of the dotted line of B of Fig. 7 and the picture corresponding to the primary data 21A of C of Fig. 7 are different. This is because the former picture still contains the background picture other than the picture as the predominant element of communication (the subject m in the example of Fig. 7). Accordingly, it is necessary that the picture separation processing part 42 cuts out picture data corresponding to the former picture from the taken picture data, and then, executes processing of removing the background picture (hereinafter, referred to as "background removal processing") from the former picture (hereinafter, referred to as "scrap picture").

Fig. 8 shows a specific example of the background removal processing.

A of Fig. 8 shows a scrap picture. The scrap picture is segmented into a picture mp as the predominant element of communication (the picture mp of the subject m in Fig. 7) and a background picture bp at the boundary mb.

The picture separation processing part 42 performs picture processing of solidly filling the background picture bp of the scrap picture of A of Fig. 8 with a color of an extreme value as a pixel value (e.g., black), for example. As a result, as shown in B of Fig. 8, picture data on a picture with the background picture bp changed to a texture picture tp is generated with respect to the scrap picture of A of Fig. 8. The picture data corresponding to B of Fig. 8 is supplied as the primary data 21A from the picture separation processing part 42 to the coding part 43.

Note that, as the primary data 21A to be transmitted to the client equipment 11B as the reception side, picture data corresponding to the picture before changed to the texture picture tp, i.e., the scrap picture containing the background picture bp may be employed. In this case, in the partial view creation unit 32B of the client equipment 11B as the reception side, as shown in Fig. 6, when the compression-coded primary data 21A is decompression-decoded in the decoding part 72, the picture data corresponding to the scrap picture containing the background picture bp is obtained. Accordingly, the moving picture frame synthesis part 77 or the like may perform picture processing of solidly filling the background picture bp of the scrap picture of A of Fig. 8 with a color of an extreme value as a pixel value (e.g., black), for example. That is, processing of attaching the texture picture tp to the decoded primary data 21A at the reception side may be performed.

### [Example of Picture Synthesis Processing of Picture Display Processing Apparatus to which the Invention is Applied]

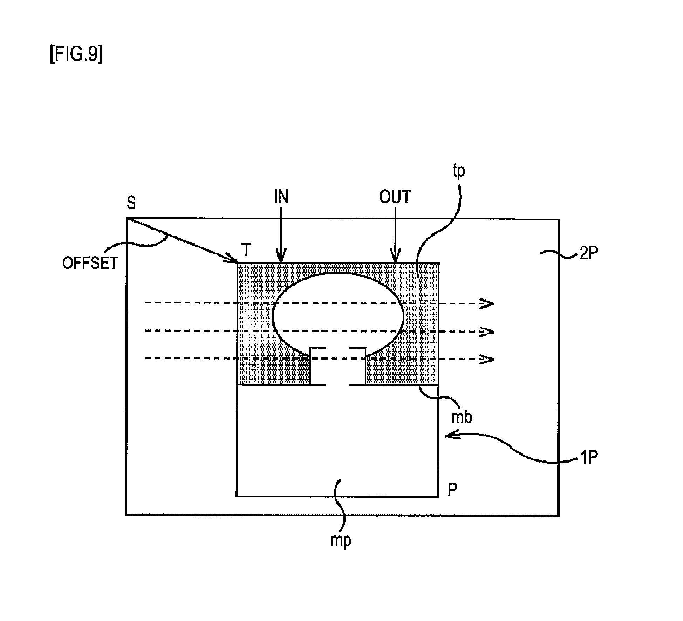

Fig. 9 is a diagram for explanation of a specific example of picture synthesis processing of synthesizing the primary data 21A and the secondary data 22A by the moving picture frame synthesis part 53. Note that the picture synthesis processing is the same as picture synthesis processing performed on the primary data 21B and the secondary data 22B in the moving picture frame synthesis part 77.

In Fig. 9, a picture 1p corresponding to the primary data 21A (hereinafter, referred to as "primary picture 1p") is placed on a picture 2P corresponding to the secondary data 21B. The primary picture 1p is segmented into the texture picture tp as the background and the picture mp as the predominant element of communication (the picture mp of the subject m in Fig. 7) as has been explained using B of Fig. 8.

In Fig. 9, the direction of scan lines of the picture is shown by broken-line arrows. Further, in Fig. 9, a start point S of an offset area, a start point T of the primary picture 1p, an end point P of the scrap picture are respectively shown.

The moving picture frame synthesis part 53 realizes synthesis processing, using the pixel value of the texture picture tp solidly filled with the extreme value (hereinafter, referred to as "fill data value") as a toggle, by switching the fill data value (the pixel value of the primary data 21A) to the pixel value of the secondary picture 2P (the pixel value of the secondary data 22A) in the scan line direction.

Specifically, when scanning is performed according to the scan line direction, the moving picture frame synthesis part 53 recognizes the pixel without the fill data value, i.e., the first pixel not solidly filled with the extreme value as In. Then, the moving picture frame synthesis part 53 continues to perform scanning and recognizes the pixel with the fill data value again, i.e., the first pixel solidly filled with the extreme value as Out. In other words, the moving picture frame synthesis part 53 recognizes a line area between In and Out as a line area of the picture mp as the predominant element of communication (the picture mp of the subject m in Fig. 7).

Next, in the scan line direction, processing of filling the area after the start point T of the primary picture 1P and before the end point P of the primary picture 1P and after In and before Out with the respective pixel values of the primary data 21A is performed. The area filled with the pixel values of the primary data 21A is the area of the picture mp as the predominant element of communication (the picture mp of the subject m in Fig. 7). Hereinafter, that area will be referred to as "primary data area".

Further, the moving picture frame synthesis part 53 performs processing of filling pixels of the areas other than the primary data area with all pixel values of the secondary data 22A.

Note that, in the embodiment, the moving picture frame synthesis part 53 employs α-blending processing with directional properties of the pixel values of the primary data 21A and the pixel values of the secondary data 22A as processing for the pixels near the boundary mb, for example.

In this manner, the moving picture frame synthesis part 53 performs synthesis processing of synthesizing the primary data 21A and the secondary data 22A.

### [Example of Processing Method of Information Processing System to which the Invention is Applied]

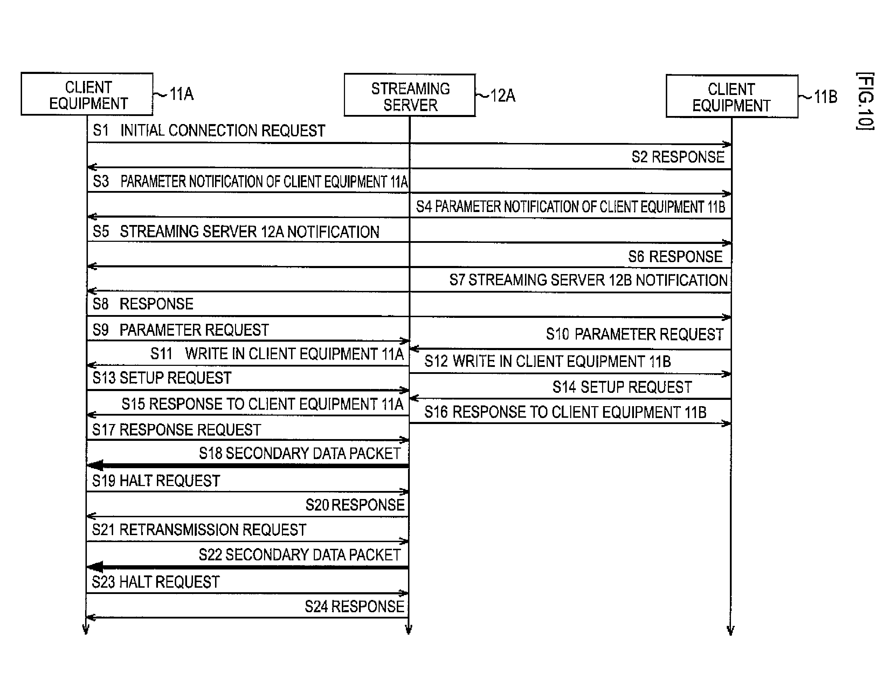

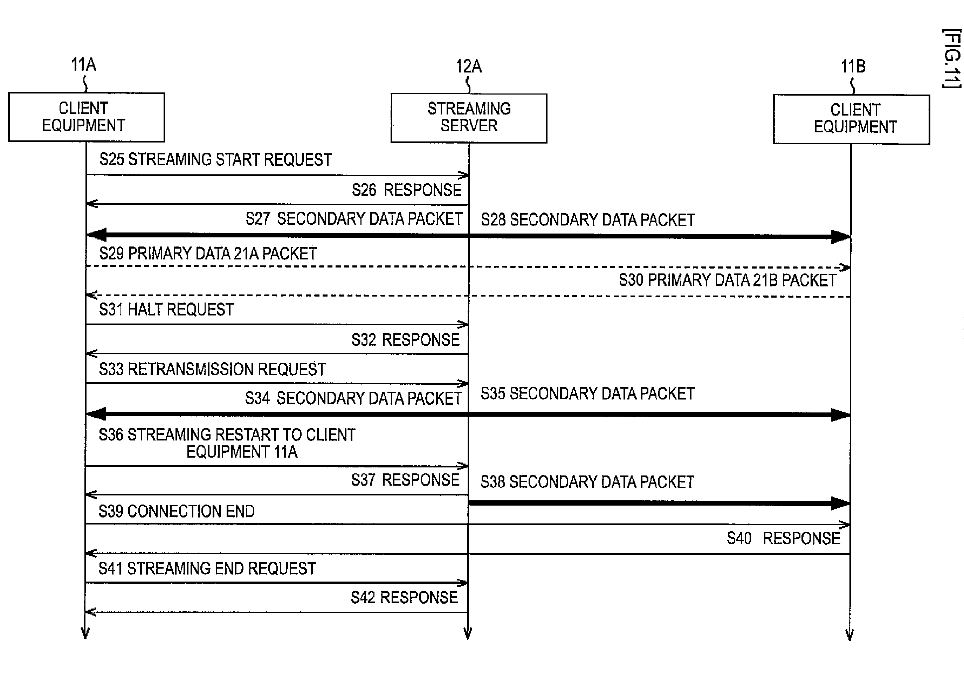

Next, processing when the client equipment 11A and the client equipment 11B perform picture communication via the network 13 (hereinafter, referred to as "interactive communication processing") will be explained with reference to flowcharts in Figs. 10 and 11.

Note that the communication of the client equipment 11A and the client equipment 11B with the streaming server 12B is the same processing as the communication with the streaming server 12A, and not shown in Figs. 10 and 11. Accordingly, the explanation of the processing will be omitted.

Further, in the interactive communication processing, basic communication settings of IP (internet Protocol) addresses, user names, etc. between the client equipment 11A and the client equipment 11B are performed via the third server (network server or the like).

At step S 1 in Fig. 10, the client equipment 11A makes a request of initial connection to the client equipment 11B.

At step S2, the client equipment 11B makes a response to the initial connection to the client equipment 11A.

At step S3, the client equipment 11A notifies the client equipment 11B of a parameter of the client equipment 11A.

At step S4, the client equipment 11B notifies the client equipment 11A of a parameter of the client equipment 11B.

As the parameter, there is parameter relating to synthesis processing, for example. Specifically, for example, with respect to the offset of the difference between the upper left position of the primary picture 1P and the upper left position of the secondary picture 2P that have been explained using Fig. 9, an XY-offset or the like is notified from the client equipment 11A to the client equipment 11B as a parameter.

The client equipment 11A, 11B notified of the parameters locate the start at synthesis with respect to the secondary data 22A, 22B, for example, in a reproduction position designated in advance, and turn into standby status.

At step S5, the client equipment 11A notifies the client equipment 11B of the location of the streaming server 12A as the delivery destination of the secondary data 22A or the like.

At step S6, the client equipment 11B makes a response to the notification to the client equipment 11A.

At step S7, the client equipment 11B notifies the client equipment 11A of the location of the streaming server 12B as the delivery destination of the secondary data 22B or the like.

At step S8, the client equipment 11A makes a response to the notification to the client equipment 11B.

At step S9, the client equipment 11A makes a request of a parameter to the streaming server 12A.

At step S10, the client equipment 11B makes a request of a parameter to the streaming server 12A.

At step S11, the streaming server 12A writes the parameter in the client equipment 11A.

At step S12, the streaming server 12A writes the parameter in the client equipment 11B.

At step S 13, the client equipment 11A makes a setup request to the streaming server 12A.

At step S 14, the client equipment 11B makes a setup request to the streaming server 12A.

At step S 15, the streaming server 12A makes a response to the setup request to the client equipment 11A. At step S16, the streaming server 12A makes a response to the setup request to the client equipment 11B.

At step S17, the client equipment 11A makes a request to transmit the secondary data 22A to the streaming server 12A.

At step S 18, the streaming server 12A transmits the secondary data 22A in units of packets to the client equipment 11A.

At step S 19, the client equipment 11A makes a request to halt communication to the streaming server 12A.

At step S20, the streaming server 12A makes a response to the halt of communication to the client equipment 11A. Then, the streaming server 12A temporarily halts the packet transmission of the secondary data 22A to the client equipment 11A.

At step S21, the client equipment 11A makes a request of retransmission to the streaming server 12A.

At step S22, the streaming server 12A transmits the secondary data 22A in units of packets to the client equipment 11A.

At step S23, the client equipment 11A makes a request to halt communication to the streaming server 12A.

At step S24, the streaming server 12A makes a response to the halt of communication to the client equipment 11A. Then, the streaming server 12A temporarily halts the packet transmission of the secondary data 22A to the client equipment 11A.

At step S25 in Fig. 11, the client equipment 11A makes a request of streaming start to the streaming server 12A.

At step S26, the streaming server 12A makes a response to the streaming start to the client equipment 11A.

At step S27, the streaming server 12A transmits the secondary data 22A in units of packets to the client equipment 11A.

At step S28, the streaming server 12A transmits the secondary data 22A in units of packets to the client equipment 11B.

At step S29, the client equipment 11A transmits the primary data 21A in units of packets to the client equipment 11B.

At step S30, the client equipment 11B transmits the primary data 21B in units of packets to the client equipment 11A.

At step S31, the client equipment 11A makes a request to halt communication to the streaming server 12A.

At step S32, the streaming server 12A makes a response to the halt of communication to the client equipment 11A. Then, the streaming server 12A temporarily halts the packet transmission of the secondary data 22A to the client equipment 11A.

At step S33, the client equipment 11A makes a request of retransmission to the streaming server 12A.

At step S34, the streaming server 12A transmits the secondary data 22A in units of packets to the client equipment 11A.

At step S35, at the same time with the processing at step S34, the streaming server 12A transmits the secondary data 22A in units of packets to the client equipment 11B.

At step S36, the client equipment 11A restarts streaming for the streaming server 12A.

At step S37, the streaming server 12A makes a response to the restart of streaming to the client equipment 11A.

At step S38, the streaming server 12A transmits the secondary data 22A in units of packets to the client equipment 11B.

At step S39, the client equipment 11A makes a request of end of connection to the client equipment 11B.

At step S40, the client equipment 11B makes a response to the end of connection to the client equipment 11A.

At step S41, the client equipment 11A makes a request of end of streaming to the streaming server 12A.

At step S42, the streaming server 12A makes a response to the end of streaming to the client equipment 11A.

This is the end of the interactive communication processing.

As explained above, the streaming server 12A and the streaming server 12B can sense the traffic state in the downlink band by checking the responses of the client equipment 11A and the client equipment 11B as the transmission sources of data. As a result, if the streaming server 12A and the streaming server 12B determine that the downlink band is insufficient, the servers may temporarily halt the transmission of the primary data 21A and the secondary data 22A. Thereby, the preferential transmission processing of the primary data 21 and the primary data 21B to the client equipment 11A and the client equipment 11B can be realized.

According to the invention, in the case where picture communication is performed, a picture as the predominant element of communication (e.g., a picture of a person) and other pictures (e.g., the background picture) may be separated and only the picture as the predominant element of communication may be transmitted by uplink. Further, the picture corresponding to the background is synthesized by downloading the streaming data from the network, and thereby, the data volume at uplink with the narrower communication bandwidth can be suppressed and the downlink bandwidth can be utilized. Therefore, interactive moving picture communication with high image quality and high resolution can be performed.

Further, the application of the invention is not particularly limited to the above described examples. For example, the invention may be applied to a technical field of synthesizing Peer-to-Peer communication such as video chat and an on-demand streaming function.

Furthermore, according to the invention, the part not desired to be seen such as an own background may be hidden from the other side of picture communication. Thereby, privacy may be ensured.

In addition, the secondary data displayed as the background is arbitrarily selected by a user, and thereby, virtual realistic sensations can be created.

The series of processing including the above described list display processing may be executed by hardware or executed by software.

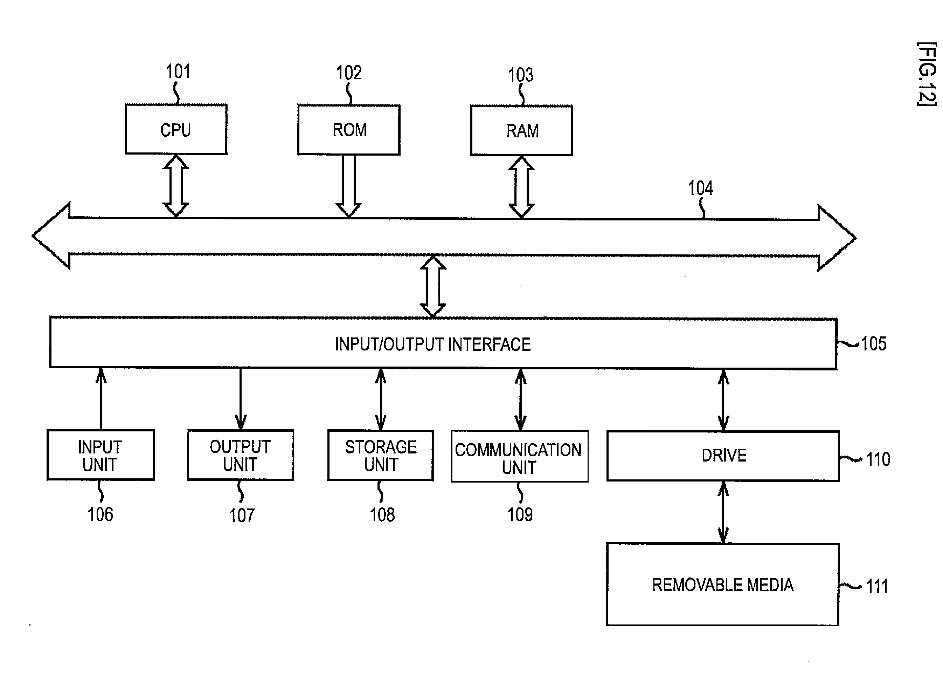

In the case where the above described series of processing is executed by software, the information processing equipment to which the invention is applied may be configured to include a computer shown in Fig. 12, for example. Alternatively, the information processing equipment to which the invention is applied may be controlled by the computer in Fig. 12.

In Fig. 12, a CPU (Central Processing Unit) 101 executes various kinds of processing according to programs recorded in a ROM (Read Only Memory) 102 or programs loaded from a storage unit 108 to a RAM (Random Access Memory) 103. Further, in the RAM 103, data necessary for the CPU 101 to execute the various kinds of processing are appropriately stored.

The CPU 101, the ROM 102, and the RAM 103 are interconnected via a bus 104. To the bus 104, an input/output interface 105 is also connected.

To the input/output interface 105, an input unit 106 including a keyboard, a mouse, etc., and an output unit 107 including a display or the like, the storage unit 108 including a hard disk or the like, and a communication unit 109 including a modem, a terminal adapter, or the like are connected. The communication unit 109 controls communication with other apparatuses (not shown) via a network including the Internet.

To the input/output interface 105, a drive 110 is connected according to need, a removable media 111 including a magnetic disk, an optical disk, a magneto-optical disk, or a semiconductor memory is appropriately mounted, and computer programs read out from them are installed into the storage unit 108 according to need.

In the case where the series of processing is executed by software, the programs forming the software are installed from a network or a recording medium into a computer incorporated in dedicated hardware or a general-purpose computer, for example, that can execute various functions by installing various programs.

The recording medium containing the programs includes not only the removable media (package media) 111 including a magnetic disk (including a floppy disk), an optical disk (including a CD-ROM (Compact Disk-Read Only Memory), a DVD (Digital Versatile Disk)), a magneto-optical disk (including MD (Mini-Disk)), or a semiconductor memory with the programs recorded, which are distributed for supplying the programs to a viewer separately from the apparatus main body, but also the ROM 102 with the programs recorded, which are incorporated into the apparatus main body in advance and supplied to the viewer, and a hard disk container in the storage unit 108, or the like.

Note that, in the specifications, the steps of describing the programs recorded in the recording medium obviously include processing time-sequentially performed in the order thereof, and further include processing not necessarily processed time-sequentially, but executed in parallel or individually executed.

Further, in the specifications, the system refers to the entire equipment including plural apparatuses and processing units.

### Industrial Applicability

The invention is applicable to a transmitter-receiver that performs picture communication, for example.

### Description of Reference Numerals

1, 2, 11A, 11B client equipment, 3, 13 network, 12A, 12B streaming server, 31 camera, 32A, 32B partial view creation unit, 33 screen configuration unit, 34 monitor, 41 picture input part, 42 picture separation processing part, 43 coding part, 44 bit allocation part, 45 transmission processing part, 46, 52, 73, 76 picture size conversion part, 47, 71, 74 reception processing part, 48 local accumulation part, 49 switch part, 50 data counter part, 51, 72, 75 decoding part, 53, 77 moving picture frame synthesis part, 101 CPU, 102 ROM, 103 RAM, 104 bus, 105 input/output interface, 106 input unit, 107 output unit, 108 storage unit, 109 communication unit, 110 drive, 111 removable media

## Claims

1. Information processing equipment comprising:
dividing means for segmenting an original picture into one or more areas and dividing predetermined one area of the one or more segmented areas from the original picture as a partial picture in a picture size of the area;
transmitting means for transmitting the partial picture divided from the original picture by the dividing means to other information processing equipment; and
requesting means for making a request to a delivery unit that delivers a background picture to be synthesized with the partial picture to transmit the background picture to the other information processing equipment.

2. The information processing equipment according to claim 1, wherein the partial picture is a picture containing an object as a predominant element of picture communication.

3. An information processing method comprising the steps of:
by information processing equipment,
segmenting an original picture into one or more areas and dividing predetermined one area of the one or more segmented areas from the original picture as a partial picture in a picture size of the area;
transmitting the partial picture divided from the original picture to other information processing equipment; and
making a request to a delivery unit that delivers a background picture to be synthesized with the partial picture to transmit the background picture to the other information processing equipment.

4. Information processing equipment comprising:
partial picture receiving means, when an original picture is segmented into one or more areas and predetermined one area of the one or more segmented areas is divided from the original picture as a partial picture in a picture size of the area by other information processing equipment, for receiving the partial picture; and
synthesizing means for synthesizing the partial picture received by the partial picture receiving means and a predetermined background picture, and thereby, generating a composite picture.

5. The information processing equipment according to claim 4, further comprising display control means for controlling display of a picture containing the composite picture synthesized by the synthesizing means.

6. The information processing equipment according to claim 5, wherein the partial picture is a picture containing an object as a predominant element of picture communication.

7. The information processing equipment according to claim 4, further comprising background picture receiving means, when the background picture is delivered from a delivery unit, for receiving the background picture,
wherein the synthesizing means synthesizes the partial picture and the background picture received by the background picture receiving means, and thereby, generating the composite picture.

8. The information processing equipment according to claim 7, further comprising holding means for holding the background picture received by the background picture receiving means,
wherein the synthesizing means synthesizes the partial picture and the background picture held by the holding means, and thereby, generating the composite picture.

9. An information processing method comprising the steps of:
by information processing equipment
when an original picture is segmented into one or more areas and predetermined one area of the one or more segmented areas is divided from the original picture as a partial picture in a picture size of the area by other information processing equipment, receiving the partial picture; and
synthesizing the received partial picture and a predetermined background picture, and thereby, generating a composite picture.

10. Information processing system comprising:
first information processing equipment including
dividing means for segmenting an original picture as an object to be transmitted from the first information processing equipment to second information processing equipment into one or more areas and dividing predetermined one area of the one or more segmented areas from the original picture as a partial picture in a picture size of the area,
transmitting means for transmitting the partial picture divided from the original picture by the dividing means to the second information processing equipment, and
requesting means for making a request to a delivery unit that delivers a background picture to be synthesized with the partial picture to transmit the background picture to the second information processing equipment;
the delivery unit that delivers the background picture to the second information processing equipment in response to the request from the first information processing equipment; and
second information processing equipment including
partial picture receiving means for receiving the partial picture transmitted from the first information processing equipment,
background picture receiving means for receiving the background picture delivered from the delivery unit, and
synthesizing means for synthesizing the partial picture received by the partial picture receiving means and the background picture received by the background picture receiving means, and thereby, generating the composite picture.

## Amended claims

### Amended claims under Art. 19.1 PCT

**1.** Amended) An information processing system comprising:
first and second information processing equipment, each including
dividing means for segmenting an original picture into one or more areas and dividing predetermined one area of the one or more segmented areas from the original picture as a partial picture in a picture size of the area,
transmitting means for transmitting the partial picture divided from the original picture by the dividing means to information processing equipment as the other side of communication,
requesting means for making a request to a delivery unit that delivers a background picture to be synthesized with the partial picture to transmit the background picture to the information processing equipment as the other side of communication,
partial picture receiving means, when an original picture is segmented into one or more areas, predetermined one area of the one or more segmented areas is divided from the original picture as a partial picture in a picture size of the area, and the partial picture is transmitted by the information processing equipment as the other side of communication, for receiving the partial picture,
background picture receiving means for receiving the background picture delivered from the delivery unit,
first synthesizing means for synthesizing the partial picture divided from the original picture by the dividing means and the background picture received by the background picture receiving means, and thereby, generating a first composite picture,
second synthesizing means for synthesizing the partial picture received by the partial picture receiving means and the background picture received by the background picture receiving means, and thereby, generating a second composite picture, and
display control means for controlling display of a picture containing the first composite picture and the second composite picture so that the first composite picture as a transmission picture and the second composite picture as a reception picture may be displayed in one screen; and
the delivery unit that deliveries the background picture to the first and second information processing equipment in response to requests from the first and second information processing equipment,
wherein the first composite picture as the transmission picture in the information processing equipment as the other side of communication and the second composite picture as the reception picture in the information processing equipment as the other side of communication are displayed in one screen.

**2.** Amended) The information processing system according to claim 1, wherein the partial picture is a picture containing an object as a predominant element of picture communication.

**3.** Amended) The information processing system according to claim 1, further comprising holding means for holding the background picture received by the background picture receiving means,
wherein the first synthesizing means synthesizes the partial picture and the background picture held by the holding means, and thereby, generating the first composite picture.

**4.** Amended) An information processing method of an information processing system comprising the steps of:
by each of first and second information processing equipment,
segmenting an original picture into one or more areas and dividing predetermined one area of the one or more segmented areas from the original picture as a partial picture in a picture size of the area,
transmitting the partial picture divided from the original picture to information processing equipment as the other side of communication,
making a request to a delivery unit that delivers a background picture to be synthesized with the partial picture to transmit the background picture to the information processing equipment as the other side of communication,
when an original picture is segmented into one or more areas, predetermined one area of the one or more segmented areas is divided from the original picture as a partial picture in a picture size of the area, and the partial picture is transmitted by the information processing equipment as the other side of communication, receiving the partial picture,
receiving the background picture delivered from the delivery unit,
synthesizing the partial picture divided from the original picture and the received background picture, and thereby, generating a first composite picture,
synthesizing the received partial picture and the received background picture, and thereby, generating a second composite picture, and
controlling display of a picture containing the first composite picture and the second composite picture so that the first composite picture as a transmission picture and the second composite picture as a reception picture may be displayed in one screen; and
by the delivery unit,
delivering the background picture to the first and second information processing equipment in response to requests from the first and second information processing equipment,
wherein the first composite picture as the transmission picture in the information processing equipment at the other side of communication and the second composite picture as the reception picture in the information processing equipment at the other side of communication are displayed in one screen.

**5.** Deleted)

**6.** Deleted)

**7.** Deleted)

**8.** Deleted)

**9.** Deleted)

**10.** Deleted)
